# EUROPÄISCHE PATENTANMELDUNG

(11) **EP 4 732 983 A1**
(43) Veröffentlichungstag der Anmeldung: **29.04.2026**
(21) Anmeldenummer: 25209327.3
(22) Anmeldetag: 17.10.2025
(51) Int. Cl.: B23K 26/08, B23K 26/38, B23K 26/402

(54) **VERFAHREN ZUM SCHLITZEN EINES SCHWAMMS ODER EINES HANDSCHWAMMS UND VERWENDUNG EINER LASEREINRICHTUNG FÜR DAS SCHLITZEN EINES SCHWAMMS ODER EINES HAND-SCHWAMMS**

(30) Priorität: 17.10.2024 DE 102024130156
(71) Anmelder: Kronen-Hansa-Werk GmbH & Co. KG, 49393 Lohne (DE)
(72) Erfinder: ROTTINGHAUS, Holger, 49393 Lohne (DE); KNAGGE, Daniel, 27793 Wildeshausen (DE)
(74) Vertreter: Patentanwälte und Rechtsanwalt Weiß, Arat & Partner mbB

(57) **Zusammenfassung**

Die Erfindung betrifft ein Verfahren zum Schlitzen eines Schwamms (1) für ein Griffbrett (2) oder einen Hand-Schwamm (14), wobei der Schwamm (1) einer Lasereinrichtung (3) mit einem beweglichen Laserkopf (4) mit einer Zuführeinrichtung (12) zugeführt wird, wobei die Lasereinrichtung (3) eine Schmutzfangrinne (5) in eine erste Arbeitsfläche (6) des Schwamms (1) oder des Hand-Schwamms (14) ritzt.

## Beschreibung

### Technisches Gebiet

Die Erfindung betrifft ein Verfahren zum Schlitzen eines Schwamms oder eines Hand-Schwamms nach dem Oberbegriff des Anspruchs 1 und eine Verwendung einer Lasereinrichtung für das Schlitzen eines Schwamms oder eines Hand-Schwamms nach dem Oberbegriff des Anspruchs 7.

### Stand der Technik

Derartige Verfahren zur Herstellung eines geschlitzten Schwamms für ein Griffbrett werden im Stand der Technik dadurch erreicht, alsdass der Schwamm durch Schneideinrichtungen gefahren wird und daher an den vorgesehenen Stellen mehr oder weniger tief eingeschnitten wird. Weiter ist ein Verfahren bekannt, bei dem der Schwamm zunächst auf einen Stempel komprimiert und anschließend scheibenweise Abgeschnitten wird, wobei der von Dem Stempel verdrängte Bereich des Schwamms einem Materialaussparung bildet und dadurch ein geschlitzter Schwamm entsteht.

Zusätzlich sind Lasereinrichtungen bekannt, die beispielsweise in der EP 2 388 121 A2 dafür verwendet werden, um ein Dekor in ein Kunststoffteil einzufügen.

Weiter ist die Verwendung einer Lasereinrichtung bekannt, um Bänder mit einer Schaumlage miteinander zu verschweißen. Eine ähnliche Verwendung ist auch aus der DE 10 2005 021 235 A1 bekannt, in welcher das Schneiden von künstlichem Leder mit einer enthaltenen Schaumschicht offenbart wird.

In der DE 31 34 569 C1 ist eine Lasereinrichtung zum Bemustern einer Warenbahn offenbart, wobei die Warenbahn auch Schaumstoff aufweist.

### Aufgabe der Erfindung

Die Aufgabe der vorliegenden Erfindung ist es, ein Verfahren zur Herstellung eines geschlitzten Schwamms für ein Griffbrett oder eines Hand-Schwamms zur Verfügung zu stellen, welcher den Fliesen verlegenden Personen die Arbeit erleichtert, wobei die Herstellung des geschlitzten Schwamms günstig und besonders gut individualisierbar ist.

### Lösung der Aufgabe

Zur Lösung der Aufgabe führen die Merkmale nach dem Anspruch 1 und des nebengeordneten Verwendungsanspruchs.

Vorteilhafte Ausgestaltungen sind in den Unteransprüchen beschrieben.

Ein erfindungsgemäßes Verfahren dient dem Schlitzen eines Schwamms oder eines Hand-Schwamms. Das Verfahren dient der Herstellung eines geschlitzten Schwamms für ein Griffbrett oder eines Hand-Schwamms für den Fliesenlegerbedarf. Im Weiteren wird der Verbund von geschlitztem Schwamm und um Griffbrett auch als Fliesenleger-Schwammbrett bezeichnet, wie er auch von den Fliesen verlegenden Personen in der Regel bezeichnet wird. Das Fliesenleger-Schwammbrett dient nach dem Verfugen in der Regel der Reinigung der frisch verlegten Fliesen durch Aufnahme und Abtragen von Fliesenkleberresten und vor allem überschüssiger Fugenmasse von der Oberfläche der frisch verlegten Fliesen. Der Hand-Schwamm weist in der Regel größere Kantenlängen auf, als der Schwamm für ein Griffbrett. Durch die größere Ausführung des Hand-Schwamms bedarf es bei der Nutzung keines Griffbretts, da die nutzende Person den größer gestalteten Hand-Schwamm gut komprimierend greifen kann, ohne dass es bei der Nutzung zu Problemen kommt, was bei dem Schwamm für ein Griffbrett nicht zwingend möglich ist.

Der Schwamm oder der Hand-Schwamm wird einer Lasereinrichtung mit einem beweglichen Laserkopf mit einer Zuführeinrichtung zugeführt. Dies erfolgt im Rahmen der Fertigung mittels üblicher Rollenbahnen, bei denen der Schwamm an einem Ende der Rollenbahn automatisch oder manuell angelegt wird und dann in einer vorgegebenen Geschwindigkeit der Lasereinrichtung zugeführt wird, wobei die Geschwindigkeit der Zuführeinrichtung so eingestellt wird, dass die Arbeitsdauer der Lasereinrichtung berücksichtigt wird. Das bedeutet, dass immer nur dann ein weiterer Schwamm der Lasereinrichtung zugeführt wird, wenn der erste Schwamm fertig bearbeitet ist. Dabei kann es auch möglich sein, dass zunächst der Schwamm für ein Griffbrett und anschließend der Hand-Schwamm der Vorrichtung zugeführt wird.

Die Lasereinrichtung ritzt eine Schmutzfangrinne in eine erste Arbeitsfläche des Schwamms oder des Hand-Schwamms ein. Dabei wird der Schwamm oder der Hand-Schwamm nicht vollständig durchtrennt, sondern in der Regel nur bis zur Hälfte der Gesamtdicke des Schwamms eingeritzt. Der Hand-Schwamm wird bevorzugt nur zu einem Drittel seiner Gesamthöhe eingeritzt. Dadurch erhält der geschlitzte Schwamm eine ausreichende Steifigkeit um in einem weiteren Schritt mit dem Griffbrett adhäsiv mittels üblicher Kleber verbunden zu werden. Auch der Hand-Schwamm erhält eine ausreichende Steifigkeit, sodass die nutzende Person gut komprimierend in den Hand-Schwamm greifen und diesen nutzen kann.

In manchen Fällen und je nach Material des Schwamms kann die Schmutzfangrinne auch mehr als die Hälfte der Dicke des Schwamms oder nur ein Drittel der Dicke des Schwamms eingeritzt werden. Gleiches gilt für den Hand-Schwamm.

Die Lasereinrichtung kann dabei einen kalten oder einen heißen Laserstrahl erzeugen. Wichtig ist dabei neben der Material auflösenden Bearbeitung durch beispielsweise Wegschmelzen des Materials bei Hitze auch vorteilhaft zu beobachten, dass die Schmutzfangrinnen versiegelte Mikrostrukturen aufweisen, die die Lasereinrichtung in den betroffenen Schwammbereichen erreicht. Dabei werden also insbesondere die Schmutzfangrinnen davor bewahrt, dass ein ungewolltes Zusetzten der Schwammstruktur geschieht. Die Versiegelung führt zu einer besseren Haptik bei der Anwendung des Fliesenleger-Schwammbretts oder des Hand-Schwamms durch die Fliesen verlegende Person.

Auch wird durch die oben beschriebene Versiegelung der Schmutzfangrinne durch die Verwendung der Lasereinrichtung eine Verfestigung des Schwamm-Materials im Bereich der Schmutzfangrinne erreicht. Auch weil bei der Verwendung der Lasereinrichtung Schwamm-Material aus den Schmutzfangrinnen entfernt wird, entsteht eine gut sichtbare Schmutzfangrinne. Das wiederum hat den Vorteil, dass das geschlitzte Schwammbrett, anders als bei den mittels Klingen oder ähnlichem geschnittenen und damit auch geschlitzten Schwammbrettern zu erkennen wäre. Beim Stand der Technik wird in der Regel kein Schwamm-Material entfernt, sodass der Schnitt in Form des Schlitzes nicht ohne Weiteres erkennbar ist und damit auch die Eigenschaft Schmutz von einer Oberfläche zu nehmen eingeschränkt ist.

Durch den beweglichen Laserkopf der Lasereinrichtung ist es vorteilhaft möglich, dass ein Motiv als Schmutzfangrinnen eingeritzt werden. Dabei ist die Auswahl der Motive beliebig anpassbar und erweiterbar. Bei durch Schnitten erreichten geschlitzten Schwammbrettern oder Hand-Schwämmen nach dem Stand der Technik ist es beispielsweise nicht möglich, dass ein Rahmenreich des Schwamms oder des Hand-Schwamms nicht geschnitten wird. Dies liegt daran, dass die Schwämme zum Schlitzen durch Schneidtische gefahren werden und das Abheben der rotierenden Schneidblätter beispielsweise kostenintensiv und ungenau wäre, wenn man einen Rahmenbereich des Schwamms oder des Hand-Schwamms ungeschlitzt lassen wollte. Gleiches gilt für die Hand-Schwämme nach dem Stand der Technik.

Durch den beweglichen Laserkopf ist es beispielsweise auch möglich, dass ein Motiv in Form eines Tropfens in den Schwamm oder den Hand-Schwamm gelasert wird, was mittels Schneidblättern nur in manueller Einzelarbeit möglich wäre.

Auch ist es möglich Motive in Form von Kreisen, Ovalen, Gitterstrukturen etc. einzuritzen.

Zum Erhalten eines Fliesenleger-Schwammbretts wird das Griffbrett mit einer zweiten Arbeitsfläche des Schwamms adhäsiv oder auf andere fachübliche Weise verbunden. Es kann auch vorgesehen werden, dass die Lasereinrichtung ggf. Kleberaufnahme-Ritzen in die zweite Arbeitsfläche des Schwamms einfügt, um auf diese Weise mit weniger Kleber eine ausreichend feste Verbindung zu erzeugen.

Eine Bewegung des beweglichen Laserkopfs kann in einem Rechner vorprogrammiert werden.

Zusätzlich kann zur Automatisierung auch eine Überwachungseinrichtung in Form einer Kamera oder eines Sensors eine Bemaßung und/oder eine Form des Schwamms oder des Hand-Schwamms einem Ist/Soll-Abgleich unterziehen und dabei ein einzuritzendes Motiv einer Schmutzfangrinne automatisch in dem Rechner auswählen und den beweglichen Laserkopf zur Erzeugung des ausgewählten Motivs entsprechend ansteuern.

Weiterhin ist die erfindungsgemäße Verwendung einer Lasereinrichtung für das Schlitzen eines Schwamms für ein Griffbrett oder eines Hand-Schwamms dadurch zu erreichen, dass ein beweglicher Laserkopf eine Schmutzfangrinne in eine erste Arbeitsfläche des Schwamms oder auf mindestens eine ausgewählte Arbeitsfläche des Hand-Schwamms ritzt. Die o.g. Vorteile beim Verfahren zur Herstellung sind auf die Verwendung der Lasereinrichtung komplett übertragbar und ergeben sich insbesondere aus der Verwendung der Lasereinrichtung.

Die Lasereinrichtung kann dabei einen kalten oder einen heißen Laserstrahl erzeugen, wobei heiß oder kalt von der Umgebungstemperatur und den Materialeigenschaften des Schwamms oder des Hand-Schwamms abhängt. Wichtig ist, dass der Laserstrahl eine bestimmte Tiefe der Schmutzfangrinne und zwar unabhängig vom eingesetzten Schwamm-Material erreicht.

Die Lasereinrichtung ritzt mittels des beweglichen Laserkopfs ein Motiv als Schmutzfangrinne in den Schwamm oder den Hand-Schwamm ein. Eine Bewegung des beweglichen Laserkopfs kann in einem Rechner vorprogrammiert werden.

Eine Überwachungseinrichtung kann derart ausgelegt werden, alsdass beispielsweise eine Bemaßung und/oder eine Form des Schwamms oder des Hand-Schwamms in dem Rechner einem Ist/Soll-Abgleich unterzogen wird und dabei ein einzuritzendes Motiv einer Schmutzfangrinne in dem Rechner automatisch ausgewählt wird und zur Erzeugung des ausgewählten Motivs der beweglichen Laserkopf entsprechend angesteuert wird.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine schematische Seitenansicht eines Ausführungsbeispiels des erfindungsgemäßen Verfahrens bzw. der Verwendung;
- Figur 2: eine beispielhafte Draufsicht auf eine erste Arbeitsfläche (6) des Schwamms (1);
- Figur 3: eine weitere beispielhafte Draufsicht auf eine weitere erste Arbeitsfläche (6) des Schwamms (1);
- Figur 4: eine Seitenansicht eins Fliesenleger-Schwammbretts.

### Ausführungsbeispiel

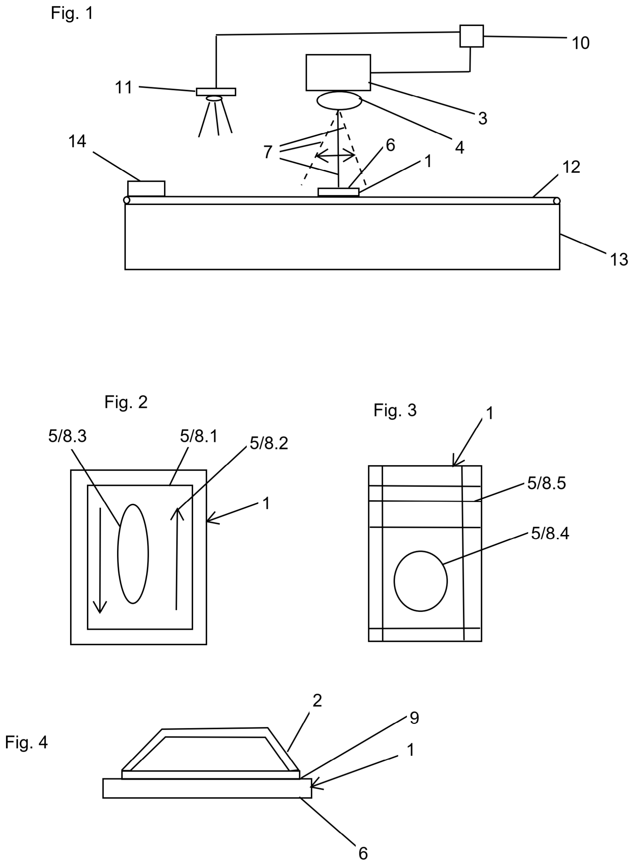

Die Figur 1 ist eine schematische Seitenansicht auf eine Vorrichtung, auf der das erfindungsgemäße Verfahren zur Herstellung eines geschlitzten Schwamms 1 für ein Griffbrett 2 oder eines Handschwamms (14) gezeigt wird.

In gleicher Weise wird auch die erfindungsgemäße Verwendung einer Lasereinrichtung 3 für die Herstellung eines geschlitzten Schwamms 1 für ein Griffbrett 2, wobei ein beweglicher Laserkopf 4 eine Schmutzfangrinne 5 in eine erste Arbeitsfläche 6 des Schwamms 1 ritzt.

Der Schwamm 1 wird mit einer Zuführeinrichtung 12 die auf einem Tisch 13 angeordnet ist der Lasereinrichtung 3 mit dem beweglichen Laserkopf 4 zugeführt, wobei die Lasereinrichtung 3 eine Schmutzfangrinne 5 (siehe Figuren 2 und 3) in die erste Arbeitsfläche 6 des Schwamms 1 ritzt.

Der bewegliche Laserkopf 4 der Lasereinrichtung 3 erzeugt einen Laserstrahl 7, wobei die gestrichelt dargestellten Laserstrahlen 7 die Beweglichkeit des Laserkopfs 4 und damit des Laserstrahls 7 verdeutlichen sollen.

Eine Überwachungseinrichtung 11 kann vorgeschaltet vor die Lasereinrichtung eine Bemaßung und/oder eine Form des Schwamms 1 einem Ist/Soll-Abgleich unterziehen und dabei ein einzuritzendes Motiv 8 einer Schmutzfangrinne 5 automatisch in einem Rechner 10 auswählen und den beweglichen Laserkopf 4 zur Erzeugung des ausgewählten Motivs 8 ansteuern.

Es ist aber auch möglich, dass nur eine Bewegung des beweglichen Laserkopfs 4 in einem Rechner 10 vorprogrammiert wird, ohne dass es der vorgeschalteten Überwachungseinrichtung 11 bedürfen würde.

In den Figuren 2 und 3 ist eine Draufsicht auf die erste Arbeitsfläche 6 des Schwamms 1 gezeigt, nachdem die Lasereinrichtung 3 verwendet wurde.

Die Lasereinrichtung 3 kann mittels des beweglichen Laserkopfs 4 ein Motiv 8.1 einen Rahmen als Schmutzfangrinne 5 einritzen, wobei zwischen dem Rahmen und der umlaufenden Abschnittkante des Schwamms 1 das Schwamm-Material nicht geschlitzt oder anders bearbeitet wurde.

Weiter ist ein zweites Motiv 8.2 in Form eines Pfeils in die erste Arbeitsfläche 6 des Schwamms 1 eingeritzt. Es sind auch einzuritzende Wellenformen möglich. Grundsätzlich ist eine beliebige Individualisierbarkeit auf die Wünsche von Kunden möglich.

Außerdem ist in Figur 2 beispielhaft gezeigt, dass auch ein drittes Motiv 8.3 in Form eines Ovals in die erste Arbeitsfläche 6 des Schwamms 1 eingeritzt.

In der Figur 3 ist dann noch ein viertes Motiv 8.4 in Form eines Kreises und eine zumindest teilweise gezeigte Gitterstruktur eines weiteren Motivs 8.5 zu erkennen.

In Figur 4 findet sich dann das Fliesenleger-Schwammbrett, welches aus dem Griffbrett 2 besteht, welches mit einer zweiten Arbeitsfläche 9 des Schwamms 1 beispielsweise adhäsiv verbunden wurde. Die erste Arbeitsfläche 6 ist dabei die der zweiten Arbeitsfläche 9 abgewandte Seite des geschlitzten Schwamms 1.

### Bezugszeichenliste

| | |
|---|---|
| 1 | Schwamm |
| 2 | Griffbrett |
| 3 | Lasereinrichtung |
| 4 | Laserkopf |
| 5 | Schmutzfangrinne |
| 6 | Erste Arbeitsfläche |
| 7 | Laserstrahl |
| 8 | Motiv |
| 9 | Zweite Arbeitsfläche |
| 10 | Rechner |
| 11 | Überwachungseinrichtung |
| 12 | Zuführeinrichtung |
| 13 | Tisch |
| 14 | Hand-Schwamm |

## Patentansprüche

1. Verfahren zum Schlitzen eines Schwamms (1) für ein Griffbrett (2) oder eines Handschwamms (14),
**dadurch gekennzeichnet, dass**
der Schwamm (1) oder der Handschwamm (14) einer Lasereinrichtung (3) mit einem beweglichen Laserkopf (4) mit einer Zuführeinrichtung (12) zugeführt wird, wobei die Lasereinrichtung (3) eine Schmutzfangrinne (5) in eine erste Arbeitsfläche (6) des Schwamms (1) ritzt.

2. Verfahren nach Anspruch 1, **dadurch gekennzeichnet, dass** die Lasereinrichtung (3) einen kalten oder einen heißen Laserstrahl (7) erzeugt.

3. Verfahren nach einem der vorigen Ansprüche, **dadurch gekennzeichnet, dass** die Lasereinrichtung (3) mittels des beweglichen Laserkopfs (4) ein Motiv (8.1 bis 8.5) als Schmutzfangrinne (5) einritzt.

4. Verfahren nach einem der vorigen Ansprüche, **dadurch gekennzeichnet, dass** das Griffbrett (2) mit einer zweiten Arbeitsfläche (9) des Schwamms (1) adhäsiv verbunden wird.

5. Verfahren nach einem der vorigen Ansprüche, **dadurch gekennzeichnet, dass** eine Bewegung des beweglichen Laserkopfs (4) in einem Rechner (10) vorprogrammiert wird.

6. Verfahren nach Anspruch 5, **dadurch gekennzeichnet, dass** eine Überwachungseinrichtung (11) eine Bemaßung und/oder eine Form des Schwamms (1) oder des Hand-Schwamms (14) einem Ist/Soll-Abgleich unterzieht und dabei ein einzuritzendes Motiv (8.1 bis 8.5) einer Schmutzfangrinne (5) automatisch in dem Rechner (10) auswählt und den beweglichen Laserkopf (4) zur Erzeugung des ausgewählten Motivs (8.1 bis 8.5) ansteuert.

7. Verwendung einer Lasereinrichtung (3) für die Herstellung eines geschlitzten Schwamms für ein Griffbrett (2) oder eines Hand-Schwamms (14), wobei ein beweglicher Laserkopf (4) eine Schmutzfangrinne (5) auf in eine erste Arbeitsfläche des Schwamms (1) ritzt.

8. Verwendung nach Anspruch 7, **dadurch gekennzeichnet, dass** die Lasereinrichtung (3) einen kalten oder einen heißen Laserstrahl (7) erzeugt.

9. Verwendung nach Anspruch 7 oder 8, **dadurch gekennzeichnet, dass** die Lasereinrichtung (3) mittels des beweglichen Laserkopfs (4) ein Motiv (8) als Schmutzfangrinne (5) in den Schwamm (1) oder den Hand-Schwamm (14) einritzt.

10. Verfahren nach einem der vorigen Ansprüche 7 bis 9, **dadurch gekennzeichnet, dass** eine Bewegung des beweglichen Laserkopfs (4) in einem Rechner (10) vorprogrammiert wird.

11. Verfahren nach einem der vorigen Ansprüche, **dadurch gekennzeichnet, dass** eine Überwachungseinrichtung (11) eine Bemaßung und/oder eine Form des Schwamms (1) oder des Hand-Schwamms (14) in dem Rechner (10) einem Ist/Soll-Abgleich unterzieht und dabei ein einzuritzendes Motiv (8.1 bis 8.5) einer Schmutzfangrinne (5) in dem Rechner (10) automatisch ausgewählt wird und zur Erzeugung des ausgewählten Motivs (8.1 bis 8.5) der beweglichen Laserkopf (4) entsprechend angesteuert wird.
